# EUROPEAN PATENT SPECIFICATION

(11) **EP 0 436 024 B1**
(45) Date of publication and mention of the grant of the patent: **19.07.1995**
(21) Application number: 89910185.1
(22) Date of filing: 14.09.1989
(51) Int. Cl.: B41J 2/435

(54) **LED ARRAY PRINTER**
LED-MATRIXDRUCKER
IMPRIMANTE MATRICIELLE A DIODES ELECTROLUMINESCENTES

(30) Priority: 21.09.1988 JP 236799/88
(43) Date of publication of application: 10.07.1991
(73) Proprietor: Oki Electric Industry Company, Limited, Tokyo 105 (JP)
(72) Inventor: TANUMA, Jiro Oki Electric Industry Co., Ltd., Minato-ku Tokyo 105 (JP); AKUTSU, Naoji Oki Electric Industry Co., Ltd., Minato-ku Tokyo 105 (JP)
(74) Representative: Betten & Resch
(86) International application number: PCT/JP89/00940
(87) International publication number: WO 90/03273

(56) References cited:
- EP-A- 0 260 574
- GB-A- 2 193 162
- JP-A- 6 371 373
- JP-A-56 168 292
- JP-A-62 275 759
- JP-Y- 6 310 293
- US-A- 4 588 883
- PATENT ABSTRACTS OF JAPAN, vol. 10, no. 155 (M-485)[2211], 4 June 1986;& JP-A-61 10475 (OKI DENKI KOGYO KK) 17 January 1986.

## Description

### FIELD OF THE INVENTION

The present invention relates to an LED array printer which prints given characters and graphics on paper or the like with the use of, for example, electrophotographic technology.

### BACKGROUND ART

An LED array printer employs such an arrangement that light emitted from an LED array print head is transmitted through an rod lens array and irradiated onto a photosensitive drum so as to obtain an electrostatic latent image which is then developed into a toner image by a developing unit and is then transferred onto paper by a transfer unit.

To form an electrostatic latent image, the photosensitive drum is charged to a predetermined potential by a charger, and is irradiated with light corresponding to predetermined data.

An LED array print head includes a plurality of array chips and an LED driver for driving the array chips, mounted on a substrate, and is driven by signals transmitted between itself and a control circuit.

The control circuit for controlling the LED array print head is connected to the LED array print head through connectors and a connecting cord, and includes a logic circuit for controlling the timing of data provided to the LED print head, a CPU, memory storing therein a control program for printing, data and the like, and a switch array for setting several kinds of modes.

The switch array is used to set parameter information relating to the specification of the LED array print head, dispersion of characteristics and the like. The CPU detects the turn-on and -off of the switch array and produces the parameter information corresponding to the result of the turn-on and -off so as to control the logic circuit.

The LED array chips having a large division number are used in order to increase the dot resolution so as to enhance the quality of printing, and further, the number of the array chips has to be increased in order to enable printing on a large size of paper. However, this causes higher cost, and further, the power consumption increases. Accordingly, such an LED printer is in general designed in order to have a specification which copes with specific needs or demands.

However, should printers be specifically manufactured based on several different specifications, the manufacturing cost would soar up while the time for research and development would become longer. To avoid such higher manufacturing cost and longer R&D time, a basic structure is shared with different kinds of printers, and only component parts which cannot be common are specifically designed. For example, with the replacement of LED array print heads and changes in several parameters for printing control, the same kind of printers can have several different functions. Further, in the case of the presence of dispersion in characteristics such as light volume or the like among the LED array print heads, uniform printing qualities cannot be obtained even though LED array print heads having the same specification are connected respectively to the control circuits, and accordingly, it is required that the dispersion of the characteristics is compensated while printing.

In conventional LED array printers, various functions and specifications have been obtained in the same kind of printers with the use of a switch array disposed in the control circuit, and further, printing is made while absorbing dispersion of the characteristics of the LED array print head.

However, although a specification and characteristics of an LED array print head should be known in order to perform switch manipulation of the switch array, there has been no indication showing such information on the LED head, Further, in the case of replacement of LED array print heads caused by a change in the specification or a failure thereof, the turn-on and -off of the switches should be reset in accordance with a specification and characteristics of a newly connected LED array print head.

Accordingly, in a conventional LED array printer, there has been encountered a troublesome work of setting parameter data relating to a specification and characteristics of an LED array print head in the combination with a printer control circuit, and there has been a possibility of occurrence of erroneous setting, forgetting of setting or the like. Should parameter data in the control circuit be not fit to the connected LED array print head, not only the printing quality would become worse, but also the printing itself would not be ensured. Further, there is a possility of causing troubles to the LED array print head.

Document EP-A-0 042 206 discloses an electronic printer having a print wheel which is replaceable. Since various types of print wheels can be used, each print wheel is provided with a memory unit where its print characteristics are stored. Thus, each print wheel carries information unique to that particular print wheel. A controller in the printer reads the contents of the memory unit and uses this information to generate print information during operation of the printer.

Starting from a known LED printer as mentioned at the beginning, it is the object of the present invention to provide an LED printer, wherein parameter data relating to a specification and characteristic of an LED print head can be set easily, surely and precisely.

This object is solved by an LED printer according to claim 1. Claims 2 to 6 show advantageous developments of the LED printer of claim 1.

### DISCLOSURE OF THE INVENTION

The present invention provides an LED array printer comprising an LED array print head in which a plurality of LED array chips are arranged, and a control circuit for controlling the LED array print head, wherein a setting means for setting data in accordance with the type of the LED print head is provided in the LED array print head, and a data reading means for reading data from the setting means to control the LED array print head is provided in the control circuit.

The above-mentioned setting means comprises a switch array, bonding wires, short wires and the like, and is disposed in the LED print head itself. Accordingly, it is possible to set printing control data corresponding to the characteristics and the specification of the LED array print head in the combination between the control circuit and the LED array print head without fail, thereby it is possible to eliminate inaccurate printing, inferior quality of printing, a failure of the print head and the like.

Further, by serially reading set data from the setting means, the number of lines required for reading can be reduced. Further, it is possible to facilitate the realization of printers having different specifications.

### BRIEF DESCRIPTION OF THE DRAWINGS

Fig. 1 is a block diagram showing a principle of an LED array printer according to present invention;
Fig. 2 is a block diagram showing a first embodiment of the present invention;
Fig. 3 is a perspective view illustrating an LED array print head in the first embodiment of the present invention;
Fig. 4 is a block diagram illustrating a second embodiment of the present invention;
Fig. 5 is a perspective view illustrating an LED array print head in the second embodiment of the present invention;
Fig. 6 is a block diagram showing a third embodiment of the present invention;
Fig. 7 is a timing chart of Fig. 6;
Fig. 8 is a block diagram showing a fourth embodiment of the present invention;
Fig. 9 is a timing chart of Fig. 8.
Fig. 10 is a block diagram showing a fifth embodiment of the invention.

### MOST PREFERRED EMBODIMENTS OF THE INVENTION

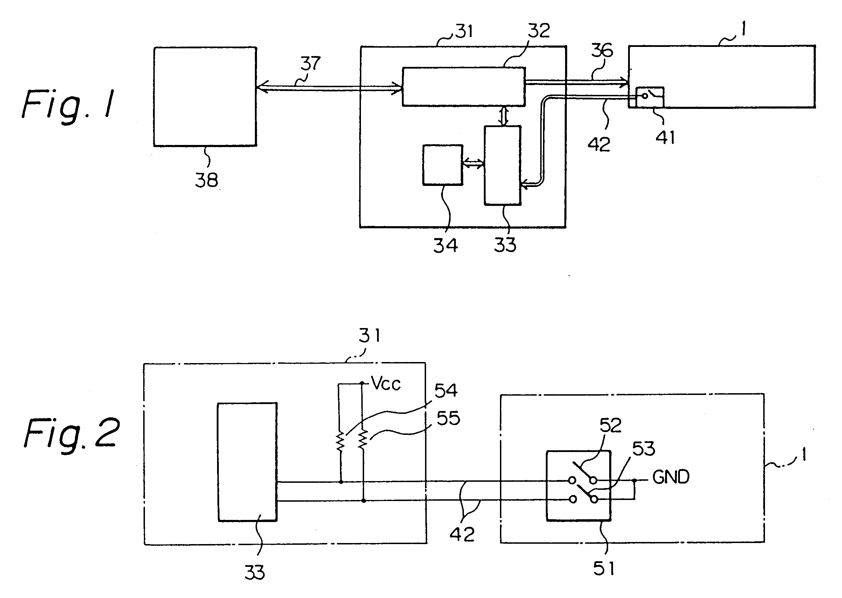

In Fig. 1 which is a block diagram showing an arrangement attaining a control principle of an LED array print head 1 according to the present invention, there is shown a control circuit board 31 having a logic circuit 32 for controlling the timing of data fed to an LED array print head 1, a CPU 33 for controlling the transmission of data and commands between itself and a host printer controller 38 and the transmission of data and signals between itself and the LED array print head 1, and for controlling the operation of printing, and memory 34 used for storing therein a control program for the CPU 33, data and the like. Reference numeral 36 denotes a line through which signals are provided to the LED array print head, including signal lines SD, SCLK, LT, STB, a power line from a power source Vcc, a ground wire and the like. Reference numeral 37 is a video signal line for printing data, which feeds data that is processed and edited by the printer controller 38 to the logic circuit 32. According to the present invention, a setting means 41 for setting the characteristics and the specification of the LED array print head 1 is disposed in the LED array print head 1. Further, the setting means 41 is connected to the CPU 33 through a line 42.

Upon energization of the power source, the CPU 33 at first reads the content of setting in the setting means 41 under a program which has been previously stored in the memory 34. Then, the CPU 33 reads corresponding parameters from the memory 34 in accordance with the read data or computes them, and sets them as print control information. Further, it drives and controls the LED array print head 1 through the intermediary of the logic circuit 32.

The setting in the setting means 41 is made concerning characteristics, a specification and the like of an LED print head 1 to be mounted, at the time of manufacturing of the LED print head 1. Accordingly, there is no risk of erroneously setting the printing control information.

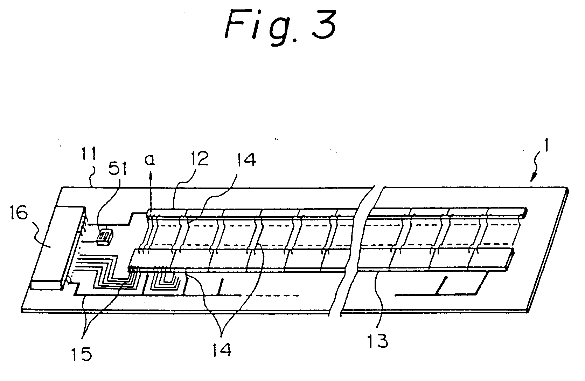

Fig. 2 shows a first embodiment of the present invention. In this figure, a switch array 51 having two switches 52, 53 is used as the setting means 41. One of the switches 52, 53 is grounded, and the other one of them is connected to the CPU 33 through the line 42 and is connected to the power source having a predetermined voltage Vcc through pull-up resistors 54, 55. Meanwhile, the memory 34 on the control board 31 has been previously stored therein with a table such as, for example, Table 1.

**TABLE 1**

| SWITCH NO. | KINDS OF LED ARRAY PRINT HEADS | | | |
|---|---|---|---|---|
| | A | B | C | D |
| 52 | TURN ON | TURN OFF | TURN OFF | TURN OFF |
| 53 | TURN ON | TURN ON | TURN OFF | TURN OFF |
| STROBE TIME (»s) | 55 | 60 | 65 | 70 |

In the combination of the turn-on and turn-off of these switches 52, 53, either one of four modes is set. Accordingly, with replacement of only one LED array print head 1 which is set in a predetermined mode, a strobe time in the mode is read from the memory 34, and is set automatically.

Fig. 3 shows an arrangement of the above-mentioned LED array print head 1. Reference numeral 11 denotes a circuit board on which a plurality of LED array chips 12 are linearly arrayed. The above-mentioned chips 12 emit light in the direction of the arrow a in the figure. Reference numeral 13 denotes an LED driver 13 composed of a serial/parallel converting circuit for data, a register for holding data which has been subjected to parallel conversion, a print timing data circuit and a drive transistor which delivers a light emission drive current to the LED in accordance with an output of this gate circuit. The LED array chips 12 and the LED driver are connected together by bonding wires 14. Reference numeral 15 denotes a printed circuit pattern for feeding a power source and signals, and reference numeral 16 denotes a connector which is connected to the printer controller 38. A switch array 51 of the LED array print head 1 is disposed in the vicinity of the connector 16, and is set as to their turn-on and turn-off upon manufacture thereof. Accordingly, in the case of connecting this LED print head 1 to the control circuit board 31, data indicating the specification and the characteristics of this print head has been already set, and parameter information can be set by simply connecting the control circuit board 31 to the LED print head 1.

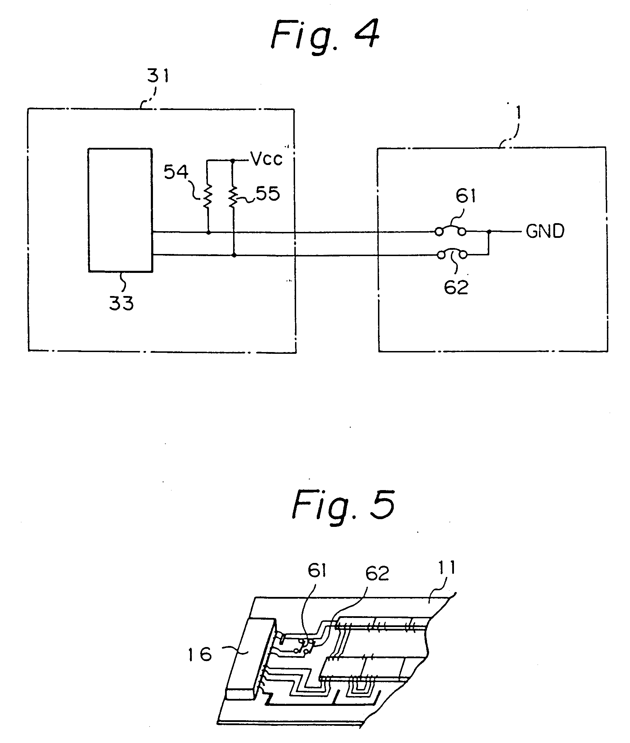

Fig. 4 shows a second embodiment of the present invention. In this embodiment, the setting means 41 is composed of short wires 61, 62. Since the setting in the setting means 41 is made for the LED array print head 1 on which the short wires are mounted, it is not always necessary to be variable. Accordingly, it is possible to fix the setting by means of the short wires 61, 62. Accordingly, upon manufacture of the LED array print head 1, the short wires 61, 62 can be soldered together with a connector 16 and the like as shown in Fig. 5. It is possible to use bonding wires, instead of the short wires.

Thus, with the use of the short wires or the bonding wires instead of the switch array, it is possible to reduce the mount space and the cost. Further, since the setting is made simultaneously with the mounting of the LED array or the like, there is substantially no risk of erroneous setting, thereby it is possible to enhance the reliability.

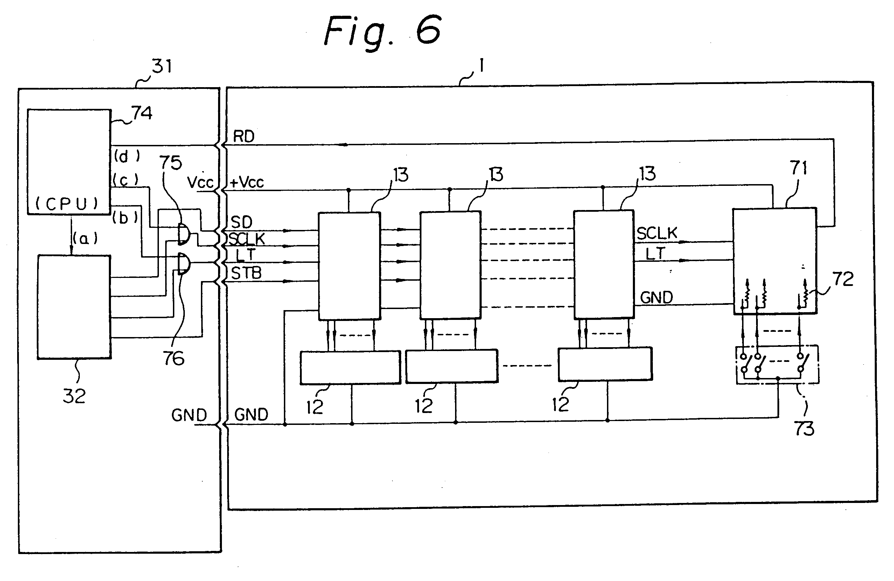

Fig. 6 shows a third embodiment of the present invention. According to the present invention, the LED array print head 1 is mounted thereon with a parallel/serial converter IC 71 which incorporates a pull-up resistor 72 and the like, in addition to a switch array 73 used as the setting means 41. Further, the control board 31 is provided thereon with OR gates 75, 76 so that a serial clock signal and a latch signal can be delivered from not only the logic circuit 32 but also a microcontroller 74 corresponding to the CPU 33, Further, the wires SCLK, LT, GND are connected to the parallel/serial converting IC 71 by means of the LED driver 13, and an output from the parallel/serial converting IC 71 is delivered to the microcontroller 74 through the wire RD.

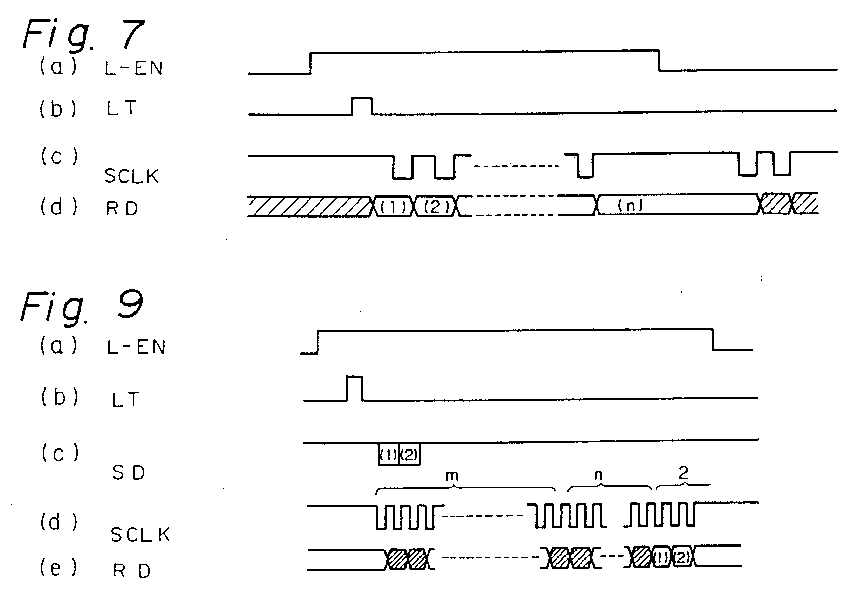

Next, the reading operation of setting data will be explained with reference to the Fig. 7. When the setting in the switch array 73 is read, the microcontroller 74 for controlling the logic circuit 32 sets a control (L-EN) signal (Fig. 7(a)) to a logic 1 so as to inhibit its operation, and thereafter, delivers a latch (LT) signal (Fig. 7(b)). This latch signal is delivered to the parallel/serial converting IC 71 through the OR gate 76, the wire LT and the LED driver 13. The parallel/serial converting IC 71 latches a parallel signal from the switch array 73 on its incorporated shift register when the latch signal is delivered. The microcontroller 74 delivers a certain number of serial clock (SCLK) signals (Fig. 7 (c)) corresponding to the number of switches in the switch array 73 after completion of the latching. These serial clock signals are delivered to the parallel/serial converting IC 71 through the OR gate 75, the wire SCLK, the LED driver 13. The parallel/serial converting IC 71 turns the set data from the switch array 73, which has been latched on its incorporated shift register, into a serial signal (Fig. 7(d)) when it receives the serial clock signal, and delivers the same to the microcontroller 74 through the wire RD. Thus, after the data set on the switch array 73 being read, the microcontroller inverts the control (L-EN) signal into a logic 0. As a result, the logic circuit 32 falls in an operative condition, and accordingly, the serial data (SD) signal, the serial clock (SCLK) signal, the latch (LT) signal and the strobe (STB) signal are fed to the wires SD, SCLK, LT, STB, respectively, so as to carry out normal printing. At this time, the signal delivered to the microcontroller 74 through the wire RD is set as invalid data.

Thus, with this arrangement in which several data set parallelly on the switch array 73 is read as serial data, the number of wires in the pattern on the board 11 of the LED array printer head 1 can be smaller than that in the first and second embodiment in which the data are red as parallel signals, and further, the number of pins for reading the set data, of the connector 16 which is connected to the control circuit board 31 can be decreased (to only one, that is, the wire RD alone). Accordingly, the package space can be reduced further, and the cost can be reduced.

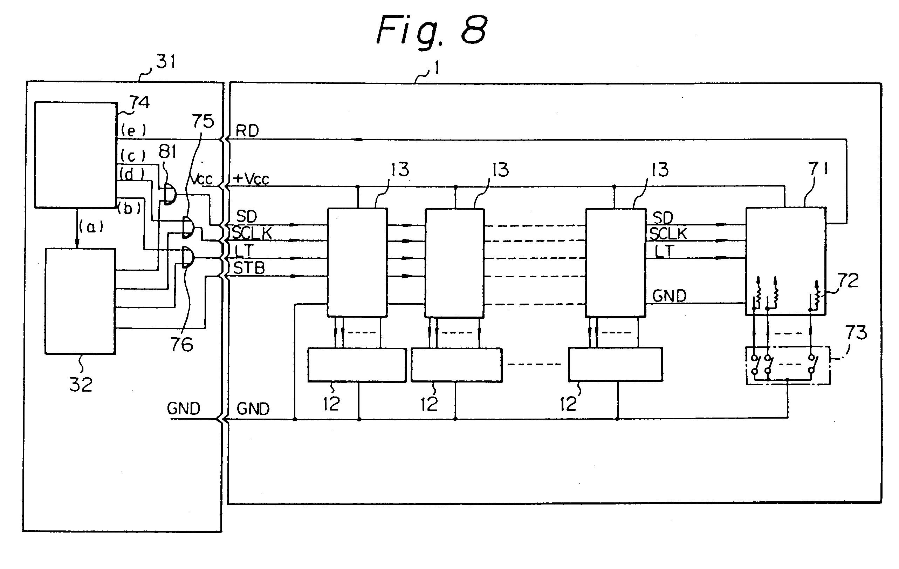

Fig. 8 shows a fourth embodiment of the present invention. In this embodiment, the wire SD is connected to the parallel/serial converting IC 71 by means of the LED driver 13, and simultaneously, an OR gate 81 is provided on the control board 31 so that the serial data (SD) signal is delivered from not only the logic signal 32 but also the microcontroller 74. However, the other arrangements are similar to those in the third embodiment.

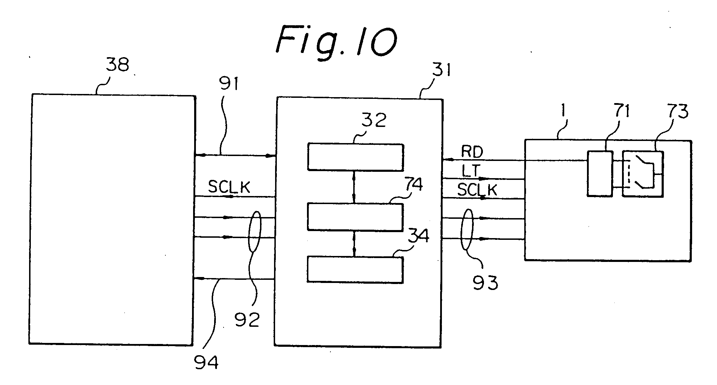

Next, the reading operation of the set data will be explained with reference to Fig. 9.

The microcontroller 74 sets at first a control (L-EN) signal (Fig. 9(a)) as a logic 1 so as to set the logic circuit 32 in a nonenergized condition, and thereafter, delivers a latch (LT) signal (Fig. 9(b)). At this time, the latching of the setting of the switch array on the shift register in the serial/parallel converting IC 71 is the same as that in the third embodiment.

Then, the microcontroller 74 delivers a two bit checking serial data (SD) signal (Fig. 9 (c)), and simultaneously, delivers a number (m+n+2) of serial clock (SCLK) signals (Fig. 9 (d)). Where the value m, the value n, and the value 2 correspond respectively to a number of dots (the number of LEDs 21), a number of bits (a number of switches on the switch array 73) and a number of the check serial data. The serial data (SD) signal is delivered to the parallel/serial converting IC 71 through the OR gate 81, the wire SD and the LED driver 13, and the serial clock (SCLK) signal is delivered to the same through the OR gate 75, the wire SCLK, and the LED driver 13. As a result, the parallel/serial converting IC 71 delivers a predetermined data (RD) signal (Fig. 9 (e) to the microcontroller 74 through the wire RD in synchronisation with the delivered serial clock signal, Since the number of the serial clocks are regulated as mentioned above, the set data on the switch array 73 is read in synchronization with the number n of the serial clocks next to the number m if the LED driver is properly connected, and further, data which is read in synchronization with the last two serial clocks becomes the checking data. If the checking data is not read in synchronization with the last two serial clocks, it can be said that the LED driver is not properly connected.

Thus, in the fourth embodiment, the set data can be read by way of a less number of the wires, and simultaneously, the connecting condition of the LED driver 13 can be tested.

Fig. 10 shows a fifth embodiment of the present invention. In this embodiment, not only parameters for compensating dispersion of the LEDs but also data relating to a basic specification of the LED array print head 1, such as a resolution of dots, a number of data wires (a way of arrangement) and the like are set by the switch array 73. Similar to, for example, that in the case of third embodiment, the microcontroller 74 delivers a latch (LT) signal and a serial clock (SCLK) signal to the LED array print head 1 so as to read the setting by the switch array 73. The thus read data concerning resolution, a dot number, a data wire number and the like are also delivered to the printer controller 38 through a bidirectional command interface 91. The printer controller 38 processes printing data corresponding to these data. On the table in the memory 34, a frequency (rate) of a serial clock (SCLK) signal, time intervals per wire (line cycle period) and the like corresponding to the read resolution, dot number, data line numbers and the like have been previously stored. The microcontroller 74 sets the frequency of the serial clock (SCLK) signal and the number thereof per wire as those read from the table of the switch array 73. This serial clock (SCLK) signal is fed to the printer controller 38 and the LED array print head 1. The printer controller 38 feeds printing data to the logic circuit 32 on the control circuit board 31 by way of a data line 92 in synchronization with the serial clock (SCLK) signal delivered to the printer controller 38. The logic circuit 32 further delivers the thus received signal to the LED array print head 1 by way of a data line 93. The wire number of the data lines 92, 93 is set to one or two corresponding to data on the switch array 73. If erroneous operation is likely to occur since the frequency of the serial clock signal is high, data is fed alternately to these lines so that the apparent clock frequency can be lowered. If the frequency is low, only one of the data lines is used.

The microcontroller 74 produces a pulse for every line cycle period, and delivers the same to the printer controller 38 by way of a line 94, The printer controller 38 delivers data per line to the logic circuit 32 in synchronization with the received pulse. Accordingly, the logic circuit 32 delivers the data to the LED array print head 1 in synchronization with the line cycle period. Further, the microcontroller 74 controls a sheet feed system (which is not shown) in synchronization with this line cycle period.

Table 2 exhibits examples of the specification of the LED array print head 1. In this example, heads are roughly classified into A4 (letter) size heads and B4 size heads in view of the sizes of sheets to be printed. There are shown five kinds of A4 size heads, and three kinds of B4 size heads. Since the size is determined directly from the combination between the resolution and the number of dots per line, it is not necessary to particularly provide set data indicating sizes. Since there are four kinds of resolution, such as 240, 300, 400 and 600 (dot/inch), the resolution is indicated by two bits. As to the numbers of dots which is obtained by multiplying a minimum unit of the LED array with an integer number, there are four kinds in the case of the A4 size, and three kinds in the case of the B5 size. If 64 dots are used as one unit, the number of dots is indicated by six bits. Since the number of the data lines is one (row) or two (row), it is indicated by one bit. Accordingly, in this embodiment, nine switches are required in the switch array 73 in order to set these data.

In such a case that the sheet feed rate is set to 25.4 mm/sec while four sheets are printed for every minute with the use of the heads shown in Table 2, line frequencies and frequencies of serial clocks (transmission clocks) are given on Table 3. By storing data as shown in Table 2 and Table 3 in the memory 34, a predetermined line frequency and a serial clock frequency can be automatically and directly determined in accordance with the nine bit set data.

It is noted that, data concerning, for example, wavelengths of light emitted from the LEDs 21 and light emission efficiencies of the LEDs 212 may be set on the switch array 73.

In this embodiment, since LED printers having different specifications can be readily arranged only by replacing LED print heads in accordance with the different specifications, it is possible to reduce the cost. Further, since, for the user, the several kinds of the printers can be used only by replacing the heads from one to another, it is possible to reduce the expense in comparison with such a case that several kinds of printers are purchased. Further, in the case of constituting a print head having a new specification, it can be attained only by changing software (firmware) on the memory 34, and accordingly, it is possible to shorten the time of research and development.

It is noted that the switch array 73 in the third, fourth and fifth embodiments can be replaced with short wires, bonding wires or the like.

**TABLE 2**

| NO. | SHEET SIZE | RESOLUTION (dpi) | DOT NUMBER/LINE | WAY OF ARRANGEMENT |
|---|---|---|---|---|
| 1 | LETTER (A4) | 240 | 2,048 | ONE ROW |
| 2 | | 300 | 2,560 | ONE ROW |
| 3 | | 400 | 3,450 | ONE ROW |
| 4 | | 400 | 3,456 | TWO ROWS |
| 5 | | 600 | 5,240 | TWO ROWS |
| 6 | B4 | 240 | 2,432 | ONE ROW |
| 7 | | 300 | 3,072 | ONE ROW |
| 8 | | 400 | 4,096 | TWO ROWS |

**TABLE 3**

| NO. | SHEET SIZE | RESOLUTION (dpi) | LINE CYCLE PERIOD (mse) | TRANSMISSION CLOCK (MHz) |
|---|---|---|---|---|
| 1 | LETTER (A4) | 240 | 4.167 | 1 |
| 2 | | 300 | 3.333 | 1 |
| 3 | | 400 | 2.5 | 2 |
| 4 | | 400 | 2.5 | 1 |
| 5 | | 600 | 1.667 | 4 |
| 6 | B5 | 240 | 4,167 | 1 |
| 7 | | 300 | 3.333 | 2 |
| 8 | | 400 | 2.5 | 3 |

### Industrial Applicability

As mentioned above, the LED array printer according to the present invention has, in its LED array print head, a means for setting data indicating a specification and characteristics of the head. Accordingly, it is possible to surely set parameter information for print control, corresponding to the specification and characteristics of the head, and therefore, it is useful for the guarantee of operation and the guarantee of printing quality for LED array printers in which several kinds of LED array print heads are combined with a common printer control circuit.

Further, printers having different specifications can be readily obtained by only replacement of print heads, it is useful for the provision of printers having various different specifications and for change in the specification of the printer.

## Claims

1. An LED printer comprising
an LED print head (1) including a plurality of LED array chips (12), which LED print head is connected to a control board (31) including a control circuit (32, 33) by way of signal lines (36, 42) and a power source line,
**characterized in,** that
said LED print head further includes a data setting means (41) for setting data in accordance with the type of said LED print head, wherein a reading means provided in said control circuit first reads said set data by using a control program stored in a memory (34) provided on said control board and then reads parameters in accordance with said set data from said memory, which parameters are associated with the specifications and characteristics of said LED print head and are set as print control information in said control circuit.

2. An LED printer according to claim 1, wherein said data setting means (41) comprises a switch array (51).

3. An LED printer according to claim 1 or 2, wherein said data setting means (41) comprises short wires or bonding wires (61, 62).

4. An LED printer according to any of the preceding claims, wherein said data setting means (41) is set during manufacture.

5. An LED printer according to any of the preceding claims, wherein said LED print head (1) further comprises a parallel/serial converting means (71) for converting parallel data set on said setting means (73) into serial data and for delivering said serial data to said data reading means.

## Patentansprüche

1. LED-Drucker, der einen LED-Druckkopf (1) aufweist, der eine Vielzahl von LED-Matrix-Chips (12) enthält und der mit Hilfe von Signalleitungen (36, 42) und einer Stromversorgungsleitung mit einer Steuerplatine (31) verbunden ist, die eine Steuerschaltung (32, 33) enthält,
dadurch gekennzeichnet, daß
der LED-Druckkopf weiterhin eine Dateneinstelleinrichtung (41) zum Einstellen von Daten in Übereinstimmung mit dem Typ des LED-Druckkopfs enthält, wobei eine in der Steuerschaltung vorgesehende Leseeinrichtung zuerst unter Verwendung eines Steuerprogramms, das in einem Speicher (34) gespeichert ist, der auf der Steuerplatine vorgesehen ist, die Einstelldaten liest und dann Parameter in Übereinstimmung mit den Einstelldaten aus dem Speicher liest, wobei die Parameter mit den Spezifikationen und Kennwerten des LED-Druckkopfs in Verbindung stehen und als Drucksteuerinformationen in der Steuereinheit eingestellt sind.

2. LED-Drucker nach Anspruch 1, wobei die Dateneinstelleinrichtung (41) eine Schaltergruppe (51) aufweist.

3. LED-Drucker nach Anspruch 1 oder 2, wobei die Dateneinstelleinrichtung (41) kurze Drähte oder Kontaktierungsdrähte (61, 62) aufweist.

4. LED-Drucker nach einem der vorhergehenden Ansprüche, wobei die Dateneinstelleinrichtung (41) während der Herstellung eingestellt wird.

5. LED-Drucker nach einem der vorhergehenden Ansprüche, wobei der LED-Druckkopf (1) weiterhin eine parallele/serielle Umwandlungseinrichtung (71) zur Umwandlung von parallelen, an der Einstelleinrichtung (73) eingestellten Daten in serielle Daten und zur Übergabe der seriellen Daten an die Datenleseeinrichtung aufweist.

## Revendications

1. Imprimante à diodes électroluminescentes comprenant
une tête d'impression (1) à diodes électroluminescentes comportant une pluralité de puces (12) à réseau de diodes électroluminescentes, cette tête d'impression à diodes électroluminescentes étant connectée à un panneau de commande (31) comportant un circuit de commande (32, 33), au moyen de lignes de signaux (36, 42) et d'une ligne de source d'alimentation,
caractérisée en ce que
ladite tête d'impression à diodes électroluminescentes comporte en outre un moyen (41) d'établissement de données pour établir des données en fonction du type de ladite tête d'impression à diodes électroluminescentes, dans laquelle un moyen de lecture utilisé dans ledit circuit de commande lit tout d'abord lesdites données établies en utilisant un programme de commande stocké dans une mémoire (34) disposée sur ledit panneau de commande, puis lit des paramètres en fonction desdites données établies à partir de ladite mémoire, ces paramètres étant associés aux spécifications et caractéristiques de ladite tête d'impression à diodes électroluminescentes et sont établis sous la forme d'information de commande d'impression dans ledit circuit de commande.

2. Imprimante à diodes électroluminescentes selon la revendication 1, dans laquelle ledit moyen (41) d'établissement de données comprend un réseau de commutateurs (51).

3. Imprimante à diodes électroluminescentes selon la revendication 1 ou 2, dans laquelle ledit moyen (41) d'établissement de données comprend des fils courts ou des fils de liaison (61, 62).

4. Imprimante à diodes électroluminescentes selon l'une quelconque des revendications précédentes, dans laquelle ledit moyen (41) d'établissement de données est réglé au cours de la fabrication.

5. Imprimante à diodes électroluminescentes selon l'une quelconque des revendications précédentes, dans laquelle ladite tête d'impression (1) à diodes électroluminescentes comprend en outre un moyen de conversion (71) parallèle/série pour convertir des données en parallèle établies dans ledit moyen d'établissement (73) en données en série et pour délivrer lesdites données en série audit moyen de lecture de données.
